Europäisches Patentamt

European Patent Office

Office européen des brevets

(19)

(11) Veröffentlichungsnummer: **0 225 977 B1**

(12) **EUROPÄISCHE PATENTSCHRIFT**

(45) Veröffentlichungstag der Patentschrift: **24.07.91**

(51) Int. Cl.⁵: **G12B 11/00**, G02F 1/133, G01D 11/28

(21) Anmeldenummer: **86113340.3**

(22) Anmeldetag: **27.09.86**

(54) Beleuchtungseinrichtung.

(30) Priorität: **02.06.86 DE 3618516**
**13.12.85 DE 3544059**

(43) Veröffentlichungstag der Anmeldung:
**24.06.87 Patentblatt 87/26**

(45) Bekanntmachung des Hinweises auf die
Patenterteilung:
**24.07.91 Patentblatt 91/30**

(84) Benannte Vertragsstaaten:
**DE FR GB**

(56) Entgegenhaltungen:
**FR-A- 2 250 172        FR-A- 2 324 207**
**GB-A- 1 190 640        US-A- 2 537 971**
**US-A- 2 837 053        US-A- 3 027 669**
**US-A- 4 104 627**

**PATENT ABSTRACTS OF JAPAN, Band 11,**
**Nr. 48 (E-77)[7550], 29. November 1977, Seite**
**7570 E 77; & JP-A-52 87 048**

**PATENT ABSTRACTS OF JAPAN, Band 8, Nr.**
**265 (P-318)[1702], 5. Dezember 1984; & JP-**
**A-59 133 504**

(73) Patentinhaber: **VDO Adolf Schindling AG**
**Gräfstrasse 103**
**W-6000 Frankfurt/Main 90(DE)**

(72) Erfinder: **Stock, Martin**
**Schleifmühle 11**
**W-6465 Biebergemünd/Wirtheim(DE)**
Erfinder: **Reisinger, Achim**
**Edelstrasse 14 a**
**W-6203 Hochheim/Main(DE)**

(74) Vertreter: **Klein, Thomas, Dipl.-Ing. (FH)**
**Sodener Strasse 9 Postfach 6140**
**W-6231 Schwalbach a. Ts.(DE)**

**Beschreibung**

Die Erfindung bezieht sich auf eine zur Durchleuchtung einer Anzeigeplatte, insbesondere einer Flüssigkristallanzeige, vorgesehene Beleuchtungseinrichtung, welche einen Licht reflektierenden Lichtkasten mit einer zur Anzeigeplatte hin mit einer Abdeckung versehene Lichtquelle hat, wobei die Abdeckung aus einem transparenten Material besteht.

Beleuchtungseinrichtungen dieser Art erfordern meist eine möglichst gleichmäßige Ausleuchtung einer relativ großen Anzeigefläche, was insbesondere für Flüssigkristallanzeigen in Armaturentafeln von Kraftfahrzeugen gilt. In der Praxis bereitet diese gleichmäßige Ausleuchtung Schwierigkeiten, da die Lichtquelle im Lichtkasten punktförmig ist und deshalb auf der Anzeigeplatte als heller Fleck erscheint, wenn sie nicht zur Anzeigeplatte hin abgedeckt ist. Bedient man sich jedoch einer Abdeckung der Lichtquelle, so erscheint auf der Anzeigeplatte statt des hellen Fleckens ein dunkler Fleck, was ebenso unerwünscht ist. Zur Vergleichmäßigung der Beleuchtung ist es deshalb in beiden Fällen erforderlich, unterhalb der Anzeigeplatte ein Streufilter geringer Transmission anzuordnen, welches das zu helle Licht unterdrückt. Durch ein solches Streufilter geringer Transmission wird zwangsläufig relativ viel Licht geschluckt, so daß die Lichtquelle entsprechend stark sein muß, was jedoch zum Beispiel in Kraftfahrzeugen im Hinblick auf die angestrebte Schonung der Batterie unerwünscht ist.

Eine Beleuchtungseinrichtung der eingangs genannten Art ist sowohl aus de US-A-28 37 053 als auch der GB-A-11 90 640 bekannt. Bei diesen Einrichtungen sind die Lichtquellen in transparenten Kappen eingeschlossen. Dabei beaufschlagt auch der von der Lichtquelle emittierte Infrarotlichtanteil die Anzeigeplatte und erwärmt diese unerwünschterweise.

Der Erfindung liegt die Aufgabe zugrunde, eine Beleuchtungseinrichtung der eingangs genannten Art zu entwickeln, welche bei Verwendung einer möglichst schwachen Lichtquelle eine möglichst starke und gleichmäßige Durchleuchtung der Anzeigeplatte ermöglicht, wobei gleichzeitig die Anzeigeplatte gegen unerwünschte Erwärmung geschützt wird.

Diese Aufgabe wird erfindungsgemäß dadurch gelöst, daß die Abdeckung ein Sieb ist.

Durch diese Gestaltung schluckt die Abdeckung gerade soviel Licht, daß die Lichtquelle auf der Anzeigeplatte weder eine hellere noch eine dunklere Partie hervorruft als der übrige, vom Lichtkasten indirekt durchleuchtete Bereich der Anzeigeplatte. Dadurch kann man je nach der erforderlichen Gleichmäßigkeit der Durchleuchtung der Anzeigeplatte entweder auf eine Streuscheibe ganz verzichten oder aber eine Streuscheibe mit hoher Transmission vorsehen. Das ermöglicht es, eine Lichtquelle mit geringerer Lichtstärke und damit geringerem Stromverbrauch vorzusehen als bei Beleuchtungseinrichtungen nach dem Stand der Technik. Trotz dieser funktionellen Vorteile ist die erfindungsgemäße Anzeigeeinrichtung überaus einfach im Aufbau, so daß sie als Massenprodukt sehr kostengünstig hergestellt werden kann.

Ein erfindungsgemäßes Sieb absorbiert und reflektiert den größten Teil des von der Lichtquelle emittierten Infrarotlichtes. Dadurch wird die Anzeigeplatte vor einer unerwünschten Erwärmung geschützt. Die durch die Infrarotabsorption entstehende Eigenerwärmung des Siebes wird auf eine große Oberfläche verteilt, so daß sie gut an die Luft im Lichtkasten abgegeben werden kann. Dadurch kann die Mindestbautiefe einer Beleuchtungseinrichtung vermindert werden. Hiervon abgesehen bewirkt das Sieb eine Leuchtdiode-Vergleichmäßigung dadurch, daß ein Teil des sichtbaren Lichtes über der Lichtquelle von dem Sieb absorbiert und damit eine Überhellung der Anzeige direkt über der Lichtquelle vermieden wird.

Ganz besonders viel störendes Infrarotlicht wird von dem Sieb reflektiert, wenn die als Sieb ausgebildete Abdeckung auf ihrer der Lichtquelle zugewandten Seite mit Aluminium beschichtet ist.

Die vom Sieb aufgenommene Wärme kann besonders gut nach außen abgeführt werden, wenn gemäß einer anderen Ausgestaltung der Erfindung der Lichtkasten an seinen sich in Einbaulage oben und unten befindlichen Seiten Belüftungsöffnungen hat.

Eine weitere Vergleichmäßigung der Beleuchtung und eine hohe Lichtausbeute lassen sich erzielen, wenn die inaktiven Flächen der Anzeigeplatte durch zum Lichtkasten hin reflektierende Schichten abgedeckt sind.

Ganz besonders kostengünstig zu erzeugen ist die Beleuchtungseinrichtung, wenn der Lichtkasten innenseitig mit einer reflektierenden Schicht versehen ist.

Eine besonders starke Durchleuchtung der Anzeigeplatte mit einer Lichtquelle einer bestimmten Lichtstärke erreicht man, wenn gemäß einer anderen Ausgestaltung der Erfindung die Schicht weiß ist.

Möglich ist es jedoch auch, eine farbige Schicht zu wählen und eine entsprechend eingefärbte Abdeckung vorzusehen.

Dadurch kann die Farbtemperatur der Lichtquelle korrigiert werden, indem zum Beispiel ein unerwünschter Gelbanteil durch eine blaue Schicht des Lichtkastens und einer blau eingefärbten Abdeckung kompensiert wird. Natürlich kann man durch die Farbe der Schicht und eine entsprechende Einfärbung der Abdeckung die Anzeigeplatte farbig durchleuchten.

Beleuchtungsschwerpunkte auf der Anzeigeplatte können auf einfache Weise erzeugt werden, wenn die Schicht in unterschiedlichen Bereichen unterschiedlich stark reflektierend ausgebildet ist.

Umgekehrt kann man auch sehr einfach an gewünschten Stellen Bereiche geringer Ausleuchtung vorsehen, indem die Abdeckung mittels zumindest eines Steges in einem solchen Bereich mit dem Lichtkasten verbunden ist, daß auf der Anzeigeplatte an einer erwünschten Stelle die geringere Ausleuchtung eintritt.

Die Abdeckung braucht nicht notwendigerweise aus einem überall lichtdurchlässigen Material zu bestehen. Ganz besonders vorteilhaft ist eine Ausgestaltung der Erfindung, gemäß der die Abdeckung ein Sieb ist. Ein solches Sieb absorbiert und reflektiert den größten Teil des von der Lichtquelle emittierten Infrarotlichtes. Dadurch wird die Anzeigeplatte vor einer unerwünschten Erwärmung geschützt. Die durch die Infrarotabsorption entstehende Eigenerwärmung des Siebes wird auf eine große Oberfläche verteilt, so daß sie gut an die Luft im Lichtkasten werden kann. Dadurch kann die Mindestbautiefe abgegeben einer Beleuchtungseinrichtung vermindert werden. Hiervon abgesehen bewirkt das Sieb eine Leuchtdichte-Vergleichmäßigung dadurch, daß ein Teil des sichtbaren Lichtes über der Lichtquelle von dem Sieb absorbiert und damit eine Überhellung der Anzeige direkt über der Lichtquelle vermieden wird.

Ganz besonders viel störendes Infrarotlicht wird von dem Sieb reflektiert, wenn die als Sieb ausgebildete Abdeckung auf ihrer der Lichtquelle zugewandten Seite mit Aluminium beschichtet ist.

Die vom Sieb aufgenommene Wärme kann besonders gut nach außen abgeführt werden, wenn gemäß einer anderen Ausgestaltung der Erfindung der Lichtkasten an seinen sich in Einbaulage oben und unten befindlichen Seiten Belüftungsöffnungen hat.

Eine weitere Vergleichmäßigung der Beleuchtung und eine hohe Lichtausbeute lassen sich erzielen, wenn die inaktiven Flächen der Anzeigeplatte durch zum Lichtkasten hin reflektierende Schichten abgedeckt sind.

Ein zusätzlicher Wärmeschutz läßt sich für die Anzeigeplatte erreichen, wenn unterhalb der Anzeigeplatte zwei Streuscheiben angeordnet sind, zwischen denen ein Luftpolster verbleibt. Dieses Luftpolster wirkt als Isolationsschicht.

Mit geringem Aufwand ist die Beleuchtungseinrichtung herstellbar, wenn gemäß einer weiteren Ausgestaltung der Erfindung die die inaktiven Flächen der Anzeigeplatten abdeckenden Schichten Weißdrucke auf der der Lichtquelle zugewandten Seite der inneren Streuscheibe sind.

Die Erfindung läßt zahlreiche Ausführungsformen zu. Zu ihrer weiteren Verdeutlichung sind zwei davon in der Zeichnung dargestellt und werden nachfolgend beschrieben. Die Zeichnung zeigt in

Fig. 1    einen Schnitt durch eine erste Ausführungsform einer Anzeigevorrichtung mit der erfindungsgemäßen Beleuchtungseinrichtung.

Fig. 2    einen Schnitt durch eine zweite Ausführungsform einer Anzeigevorrichtung mit der erfindungsgemäßen Beleuchtungseinrichtung.

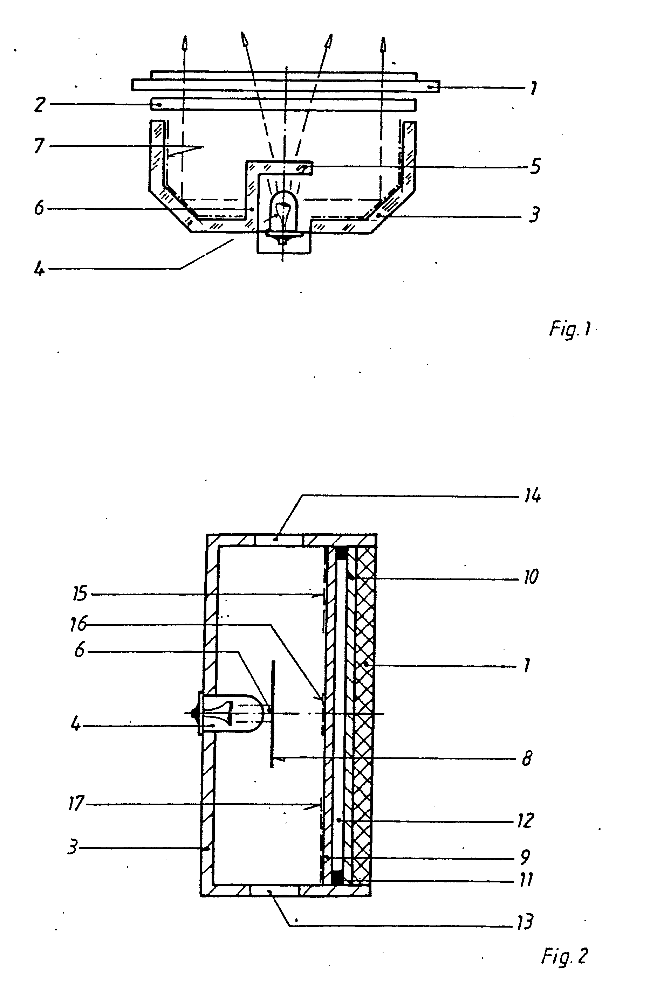

In der Figur 1 ist eine Anzeigeplatte 1 schematisch dargestellt, bei der es sich um ein Flüssigkristall-Display handeln soll. Unterhalb dieser Anzeigeplatte 1 ist eine Streuscheibe 2 hoher Transmission angeordnet. Es schließt sich ein Lichtkasten 3 an, in den eine Lichtquelle 4 an der der Anzeigeplatte 1 gegenüberliegenden Seite eingesetzt ist. Diese Lichtquelle 4 ist zur Anzeigeplatte 1 hin mittels einer Abdeckung 5 abgedeckt, die mittels eines Steges 6 mit dem Lichtkasten 3 verbunden und einstückig mit ihm ausgebildet ist.

Wichtig für die Erfindung ist, daß die Abdeckung 5 aus einem transparenten Werkstoff besteht, der eingefärbt sein kann. Aus Kostengründen handelt es sich bei dem Lichtkasten 3 und der Abdeckung 5 um ein Spritzgußteil aus zum Beispiel Polycarbonat. Da der Lichtkasten 3 natürlich nicht transparent sein darf, weist er innenseitig eine reflektierende Schicht 7 auf, die durch Lackieren mit weißem Lack erzeugt sein kann. Wenn die Farbe des Lichtes der Lichtquelle korrigiert werden soll oder eine farbige Durchleuchtung der Anzeigeplatte erwünscht ist, dann kann man die Abdeckung 5 und die Schicht 7 entsprechend einfärben.

Bei der Ausführungsform gemäß der Figur 2 ist als Abdeckung ein Sieb 8 vorgesehen, welches genau wie bei dem zuvor beschriebenen Ausführungsbeispiel mittels eines Steges 6 vor der Lichtquelle 4 gehalten ist, so daß es die Lichtquelle 4 zur Anzeigeplatte 1 hin abdeckt. Dieses Sieb 8 kann auf seiner der Lichtquelle 4 zugewandten Seite mit einer reflektierenden Schicht, insbesondere mit Aluminium, versehen sein. Auf der der Lichtquelle 4 zugewandten Seite der Anzeigeplatte 1 sind zwei Streuscheiben 9, 10 vorgesehen, die durch einen Abstandshalter 11 auf einen gegenseitigen Abstand gehalten sind, so daß zwischen ihnen ein Luftpolster 12 entsteht. In der Figur 2 ist weiterhin an der unteren und oberen Seite des Lichtkastens 3 jeweils eine Belüftungsöffnung 13, 14 dargestellt, durch die Luft strömen kann, um die vor allem im Sieb 8 aufgenommene Wärme nach außen abzuführen.

Auch bei der Ausführungsform gemäß der Figur 2 handelt es sich bei der Anzeigeplatte 1 ebenfalls um ein Flüssigkristall-Display mit negativer Anzeige. Die inaktiven Flächen sollen deshalb dunkel sein. Das kann gut durch reflektierende Schichten 15, 16, 17 erreicht werden, die auf der Innenseite der Streuscheibe 9 in Form von Weißdrucken aufgebracht sind und das auf sie auftreffende Licht zurück in den Lichtkasten 3 reflektieren.

## Patentansprüche

1. Zur Durchleuchtung einer Anzeigeplatte, insbe- sondere einer Flüssigkristallanzeige, vorgese- hene Beleuchtungseinrichtung, welche einen Licht reflektierenden Lichtkasten mit einer zur Anzeigeplatte hin mit einer Abdeckung versehenen Lichtquelle hat, wobei die Abdeckung aus einem transparenten Material besteht, dadurch gekennzeichnet, daß die Abdeckung (5) ein Sieb (8) ist.

2. Beleuchtungseinrichtung nach Anspruch 1, dadurch gekennzeichnet, daß die als Sieb (8) ausgebildete Abdeckung (5) auf ihrer der Lichtquelle (4) zugewandten Seite mit Aluminium beschichtet ist.

3. Beleuchtungseinrichtung nach einem oder mehreren der vorangehenden Ansprüche, dadurch gekennzeichnet, daß der Lichtkasten (3) an seinen sich in Einbaulage oben und unten befindlichen Seiten Belüftungsöffnungen (13, 14) hat.

4. Beleuchtungseinrichtung nach einem oder mehreren der vorangehenden Ansprüche, dadurch gekennzeichnet, daß die inaktiven Flächen der Anzeigeplatte (1) durch zum Lichtkasten (3) hin reflektierende Schichten (15, 16, 17) abgedeckt sind.

5. Beleuchtungseinrichtung nach einem oder mehreren der vorangehenden Ansprüche, dadurch gekennzeichnet, daß der Lichtkasten (3) innenseitig mit einer reflektierenden Schicht (7) versehen ist.

6. Beleuchtungseinrichtung nach Anspruch 5, dadurch gekennzeichnet, daß die Schicht (7) weiß ist.

7. Beleuchtungseinrichtung nach Anspruch 5, dadurch gekennzeichnet, daß die Schicht (7) farbig ist und die Abdeckung (5) entsprechend eingefärbt ist.

8. Beleuchtungseinrichtung nach einem oder mehreren der vorangehenden Ansprüche, dadurch gekennzeichnet, daß die Schicht (7) in unterschiedlichen Bereichen unterschiedlich stark reflektierend ausgebildet ist.

9. Beleuchtungseinrichtung nach einem oder mehreren der vorangehenden Ansprüche, dadurch gekennzeichnet, daß die Abdeckung (5) mittels zumindest eines Steges (6) in einem solchen Bereich mit dem Lichtkasten (3) verbunden ist, daß auf der Anzeigeplatte (1) an einer erwünschten Stelle eine geringere Beleuchtung eintritt.

10. Beleuchtungseinrichtung nach einem oder mehreren der vorangehenden Ansprüche, dadurch gekennzeichnet, daß unterhalb der Anzeigeplatte (1) zwei Streuscheiben (9, 10) angeordnet sind, zwischen denen ein Luftpolster (12) verbleibt.

11. Beleuchtungseinrichtung nach einem oder mehreren der vorangehenden Ansprüche, dadurch gekennzeichnet, daß die die inaktiven Flächen der Anzeigeplatte (1) abdeckenden Schichten (15, 16, 17) Weißdrucke auf der der Lichtquelle (4) zugewandten Seite der inneren Streuscheibe (9) sind.

## Claims

1. Illuminating device which is intended for transilluminating a display panel, especially a liquid-crystal display device, and which has a light-reflecting case with a light source provided with a mask masking it in the direction towards the display panel, the mask being made of transparent material, characterised in that the mask (5) is a screen (8).

2. Illuminating device according to claim 1, characterised in that the mask (5) constructed as a screen (8) is coated with aluminium at its side directed towards the light source (4).

3. Illuminating device according to one or more of the preceding claims, characterised in that the light case (3) has ventilation apertures (13, 14) at its sides which are situated above and below in the fitted position.

4. Illuminating device according to one or more of the preceding claims, characterised in that the inactive surfaces of the display panel (1) are masked by coatings (15, 16, 17) which reflect towards the light case (3).

5. Illuminating device according to one or more of the preceding claims, characterised in that the light case (3) is provided internally with a reflecting layer (7).

6. Illuminating device according to claim 5, characterised in that the layer (7) is white.

7. Illuminating device according to claim 5, characterised in that the layer (7) is coloured, and the mask (5) is correspondingly coloured.

8. Illuminating device according to one or more of the preceding claims, characterised in that the coating (7) is made so as to reflect to different degrees in different regions.

9. Illuminating device according to one or more of the preceding claims, characterised in that the mask (5) is connected to the light case (3) by means of at least one web (6) in such a region that reduced illumination occurs on the display panel (1) at a desired place.

10. Illuminating device according to one or more of the preceding claims, characterised in that two diffusing plates (9, 10) are arranged below the display panel (1), a cushion of air (12) remaining between said plates.

11. Illuminating device according to one or more of the preceding claims, characterised in that the coatings (15, 16, 17) which mask the inactive surfaces of the display panel (1) are white impressions on that side of the inner diffusing plate (9) which is directed towards the light source (4).

**Revendications**

1. Dispositif d'éclairage prévu pour éclairer, par transparence, une plaque de signalisation, en particulier une signalisation à cristaux liquides, dispositif qui comporte une boîte à lumière réfléchissant une lumière et contenant une source lumineuse munie d'un cache en direction de la plaque de signalisation, étant précisé que le cache est constitué d'un matériau transparent, dispositif caractérisé par le fait que le cache (5) est une garniture (8) de tamisage.

2. Dispositif d'éclairage selon la revendication 1 caractérisé par le fait que le cache (5), sous forme de garniture (8) de tamisage, est revêtu d'aluminium sur sa face orientée vers la source lumineuse (4).

3. Dispositif d'éclairage selon une ou plusieurs des revendications précédentes, caractérisé par le fait que la boîte (3) à lumière comporte des ouvertures (14, 13) d'aération sur ses côtés situés en haut et en bas en position de montage.

4. Dispositif d'éclairage selon une ou plusieurs des revendications précédentes, caractérisé par le fait que les surfaces inactives de la plaque (1) de signalisation sont recouvertes de couches (15, 16, 17) réfléchissant en direction de la boîte (3) à lumière.

5. Dispositif d'éclairage selon une ou plusieurs des revendications précédentes, caractérisé par le fait que la boîte (3) à lumière est munie, sur sa face intérieure, d'une couche (7) réfléchissante.

6. Dispositif d'éclairage selon la revendication 5, caractérisé par le fait que la couche (7) est blanche.

7. Dispositif d'éclairage selon la revendication 5, caractérisé par le fait que la couche (7) est colorée et que le cache (5) est coloré dans la masse de façon correspondante.

8. Dispositif d'éclairage selon une ou plusieurs des revendications précédentes, caractérisé par le fait que la couche (7) est réalisée de façon à présenter un pouvoir réfléchissant différent dans des zones différentes.

9. Dispositif d'éclairage selon une ou plusieurs des revendications précédentes, caractérisé par le fait que le cache (5) est relié, au moyen d'au moins une barrette (6), avec la boîte (3) à lumière dans une zone telle qu'un éclairement plus faible apparaît à un endroit désiré sur la plaque (1) de signalisation.

10. Dispositif d'éclairage selon une ou plusieurs des revendications précédentes, caractérisé par le fait qu'en dessous de la plaque (1) de signalisation sont disposés deux diffuseurs (9, 10) entre lesquels subsiste un matelas d'air (12).

11. Dispositif d'éclairage selon une ou plusieurs des revendications précédentes, caractérisé par le fait que les couches (15, 16, 17) qui recouvrent les surfaces inactives de la plaque (1) de signalisation sont des impressions blanches sur la face du diffuseur intérieur (9) orientée vers la source lumineuse.

Fig. 1

Fig. 2